Europäisches Patentamt

European Patent Office

Office européen des brevets

(11) Publication number: 0 082 893

A1

# EUROPEAN PATENT APPLICATION

(21) Application number: 81201404.1

(51) Int. Cl.³: **B 60 K 41/22**

(22) Date of filing: 29.12.81

(43) Date of publication of application:
06.07.83 Bulletin 83/27

(84) Designated Contracting States:
DE FR GB IT NL SE

(71) Applicant: VOLVO CAR B.V.
Postbus 1015
NL-5700 MC Helmond(NL)

(72) Inventor: v.d.Sanden, Adrianus Johannes Hendrikus
Azaleastraat 7
Eindhoven(NL)

(72) Inventor: Wielinga, Hendrik Jan
Lindelaan 3
Veghel(NL)

(74) Representative: Kooy, Leendert Willem et al,
OCTROOIBUREAU VRIESENDORP & GAADE P.O. Box
266
NL-2501 AW The Hague(NL)

(54) Control device for a gear-box.

(57) The non-uniformity of the crank-shaft with stationary number of revolutions of internal combustion engines is unpleasant for the passengers in a vehicle which is equipped with such an engine. This is avoided by providing the clutch mechanism with means (6, 7, 8, 9) which take care that after flooring the clutch pedal (1) and after switching the gear handle to neutral position, the clutch (3) remains declutched when the clutch pedal (1) is released.

EP 0 082 893 A1

Croydon Printing Company Ltd

-1-

CONTROL DEVICE FOR A GEAR-BOX.

The invention relates to a control device for a mechanically operated clutch of a motor vehicle equipped with a switchable gear-box.

With motorcars it is important to reduce the stationary number of revolutions as far as possible. This gives a considerable saving of fuel in city traffic and furthermore contributes in some way to reduction of the noise emission.

By reducing the stationary number of revolutions, a serious problem arises with respect to the non-uniformity to the crank-shaft of the engine, because of which in the clutch plate, in the gear-box and in the driving line unacceptable rattle noises occur.

In internal combustion engines, both diesel and petrol, vibrations occur because of the non-uniformity to the crank-shaft, which are transmitted to the driving mechanism and which are unpleasant for the passengers.

Several methods are thought out to solve the problem, such as using heavier fly wheels, complicated clutch plates with resilient and damping characteristics, gear-boxes with pre-strained toothed wheels, dynamic dampers on the driving shafts, etc.

These solutions are expensive, and more sensitive for wear and only partially solve the problem.

The invention tries to give a solution for the mentioned problem, which is simple and very effective.

An accidental advantage of the invention is, that the possibility is created to use a more simple clutch plate with little tolerance, because of which all noises which are caused by tolerance in torsion direction, such as irritating click-noises when switching the gears, are avoided.

According to the invention this is obtained, because in the clutch mechanism means are provided, by which after flooring the clutch pedal and after switching the gear handle to neutral position, the clutch remains declutched when the clutch pedal is then released.

The principle of the invention consists in that with stationary number of revolutions the clutch shaft is stopped without the driver having to keep the clutch pedal floored. The system suited therefore can be embodied mechanically and electrically or as a hydraulic system and also as a combination thereof.

The invention is hereafter closer elucidated by a scheme in which the use of the control device according to the invention on a hydraulically controlled clutch, is shown.

When the system is being hydraulically embodied, it has the characterizing feature, that the conduit comprises a solenoid valve which is parallely connected with a check-valve.

In this scheme the clutch pedal 1, the giving-cylinder 2 with oil container 3, the taking cylinder 4 and the pressure group 5, form the elements of a known hydraulic clutch control. In order to obtain the contemplated effect according to the invention: an overpressure valve 6, a hydraulic valve 7 for example electrically switched and a circulation with check-valve 8 are added to the control device.

The action of the control system according to the invention will be as follows:

When the driver floors the clutch pedal and then switches the gear handle from a gear position into the neutral position, the valve 7 is controlled by for example, an electrical signal from the gear handle in neutral and from the floored position of the clutch pedal 1, because of which this one seales the hydraulic conduit from the taking-cylinder 4 to the giving-cylinder 2, in such a way, that the pressure in the taking-cylinder 4 keeps excisting and the clutch remains declutched. When from this situation the clutch pedal is again controlled, the liquid is lead back to the oil container 3 from the giving-cylinder 2 via overpressure valve 6. The driver thereby gets the idea that the normal clutch pressure is excerted on the pedal which is necessary to declutch. The underpressure valve 9 avoids air suction in the giving-cylinder.

When the switch handle of the gear-box is now switched in a gear position, then the electrical signal from the neutral position is interrupted, because of which the valve 7 opens again and the system functions again as a known hydraulic clutch control.

- 1 -

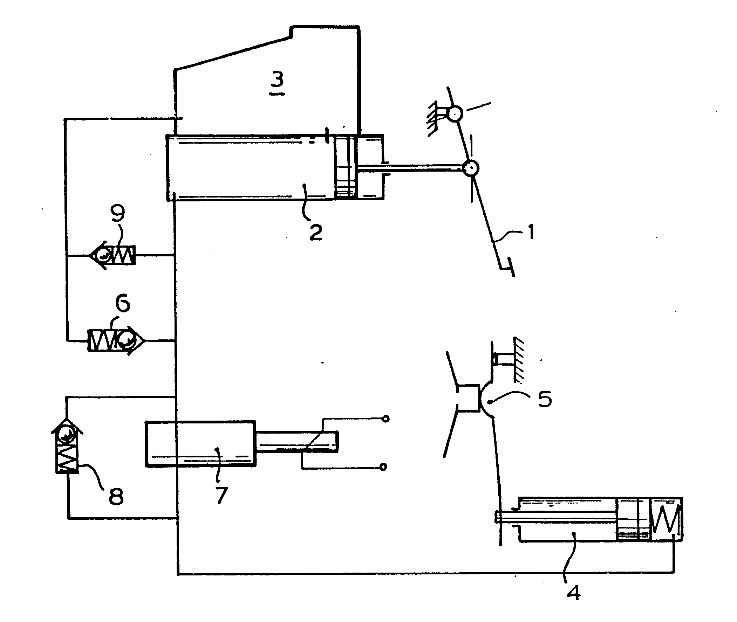

CLAIMS

1. Control device for a mechanically operated clutch of a motor vehicle equipped with a switchable gear-box, characterized in that the clutch mechanism is provided with means, by which after flooring the clutch pedal and after switching the gear handle to neutral position, the clutch remains declutched when the clutch pedal is then released.

2. Control device according to claim 1, used in combination with a hydraulically operated clutch with an oil conduit between a giving cylinder and a taking cylinder, characterized in that the conduit comprises a solenoid valve (7) which is parallely connected with a check-valve (8).

3. Control device as illustrated in the scheme and/or discussed in reference thereto.

HV/VvdZ/LvdM

0082893

**European Patent Office**

**EUROPEAN SEARCH REPORT**

Application number

EP 81 20 1404

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | GB-A-2 057 607 (SAAB-SCANIA) <br> * claim 1 * | 1,2 | B 60 K 41/22 |
| A | FR-A-2 387 137 (VANDERVELL PRODUCTS) <br> * claims 1,3 * | 1,2 | |
| A | DE-A-2 856 150 (AUTOIPARI KUTATO INTEZET) | | |

|  |
|---|
| TECHNICAL FIELDS SEARCHED (Int. Cl. ³) |
| B 60 K |

The present search report has been drawn up for all claims

| Place of search | Date of completion of the search | Examiner |
|---|---|---|
| THE HAGUE | 09-09-1982 | CINQUANTINI B. |